# EUROPEAN PATENT SPECIFICATION

(11) **EP 4 501 526 B1**
(45) Date of publication and mention of the grant of the patent: **11.11.2026**
(21) Application number: 22954959.7
(22) Date of filing: 10.08.2022
(51) Int. Cl.: B23K 26/062, G02B 6/02, G02B 6/36, B23K 26/00, B23K 26/14, B23K 26/142, B23K 26/16, B23K 26/382, B23K 26/402, B23K 26/70

(54) **LASER PIERCING METHOD, AND LASER MACHINE**
LASERDURCHSTECHVERFAHREN UND LASERMASCHINE
PROCÉDÉ DE PERÇAGE AU LASER ET MACHINE LASER

(43) Date of publication of application: 05.02.2025
(73) Proprietor: Yamazaki Mazak Corporation, Niwa-gun, Aichi 480-0197 (JP)
(72) Inventor: MORI, Yuto, Niwa-gun, Aichi 480-0197 (JP); MAEDA, Ryota, Niwa-gun, Aichi 480-0197 (JP); TOMIDA, Tatsuya, Niwa-gun, Aichi 480-0197 (JP); JITSUMORI, Takashi, Niwa-gun, Aichi 480-0197 (JP)
(74) Representative: TBK
(86) International application number: PCT/JP2022/030533
(87) International publication number: WO 2024/034041

(56) References cited:
- WO-A1-2017/134964
- WO-A1-2018/104575
- WO-A1-2020/241138
- CN-A- 111 618 430
- JP-A- 2000 084 686
- JP-A- 2007 075 878
- JP-A- 2022 507 217
- JP-A- H10 305 387
- JP-A- H11 151 590
- JP-B2- 4 562 995

## Description

### Technical Field

The present invention relates to a laser piercing method and a laser-beam working machine.

### Background Art

Many laser-beam working machines use a single laser source (for example, Patent Literature 1). Patent Literature 2 recites a machine tool that controls the strength of laser at a center portion and a peripheral portion of a laser spot to minimize adherence of spatter to a workpiece with its thickness taken into consideration, in an attempt to provide high-quality piercing. Patent Literature 3 discloses a technique to prevent piercing-caused adherence of spatter by applying oil before piercing. Patent Literature 4 discloses a laser piercing method for piercing a laser beam by irradiating a laser beam on a line to be cut of a member to be cut, spraying oil over the entire upper surface of the member to be cut during a movement operation of the member to be cut before laser irradiation, and irradiating the laser beam on the line to be cut of the member to be cut after spraying the oil to form a laser piercing hole. Patent Literature 5 discloses a method for laser puncturing a workpiece including a prepuncture step, which is used to perform laser puncture on the workpiece to form an initial pit on the surface of the workpiece; and a piercing step to pierce the workpiece from the bottom of the initial pit; wherein, the opening diameter of the initial pit is larger than the diameter of the puncture hole formed in the puncture step. Patent Literature 6 discloses optical fibers having a complex configuration of a core region and a clad region and laser systems that utilizes such fibers to transfer laser energy to the object to be machined, which allow altering the BPP of a laser system without the adjustment of the laser beam or optical system at the output of the optical fiber. Patent Literature 7 discloses a laser processing method and a laser processing device capable of combining laser beams having different wavelengths and controlling the power distribution of the combined laser beams. Patent Literature 8 discloses a laser processing apparatus and method for especially cutting thick materials, wherein piercing of the workpiece is done by controlling specific power densities and relation between the center beam and ring beam, depending on the thickness of the workpiece.

### Citation List

### Patent Literature

PTL1: JP H8-192283 A.
PTL2: WO/2017/134964.
PTL3: JP 2000-84686 A.
PTL4: JP 4562995 B2.
PTL5: CN 111618430 A.
PTL6: JP 2022507217 A.
PTL7: WO 2020241138 A1.
PTL8: WO 2018104575 A1.

### Summary of Invention

### Technical Problem

Even if oil is applied before piercing, a base portion of spatter adjacent to a pierced hole is directly connected to the material of the workpiece, without oil intervention. If the base portion is cooled and solidified in the process of piercing, it is difficult to remove spatter.

An object of the technique disclosed in the present application is to provide a laser piercing method and a laser-beam working machine that improve machining quality by preventing a base portion of a piercing-caused spatter from solidifying.

### Solution to Problem

A laser piercing method according to a first embodiment of the present disclosure is defined in claim 1.

According to a second embodiment of the present disclosure, the laser piercing method according to the first embodiment includes, after heating the base portion, spraying the gas to the spatter to remove the spatter from the machined workpiece. It is to be noted that the direction in which gas is sprayed to the spatter is preferably different from the direction in which gas is sprayed to scatter the melted part of the workpiece.

According to a third embodiment of the present disclosure, in the laser piercing method according to the second embodiment, removing the spatter from the machined workpiece includes spraying the gas to around the base portion through a torch while moving the torch along a circle surrounding the base portion from outside the base portion.

According to a fourth embodiment of the present disclosure, in the laser piercing method according to any one of the first to third embodiments, the spatter is heated by the second laser beam to a degree that prevents the spatter from adhering to the machined workpiece and from solidifying on the machined workpiece. In a case that a plurality of spatters occur by the first laser beam, the plurality of spatters may be heated by the second laser beam to a degree that prevents at least one spatter of the plurality of spatters from adhering to the machined workpiece and from solidifying on the machined workpiece. In this case, the plurality of spatters are preferably heated by the second laser beam to a degree that causes at least one spatter of the plurality of spatters to be scattered by the gas according to the second or third embodiment. Also, the plurality of spatters are further preferably heated by the second laser beam to a degree that causes all the spatters of the plurality of spatters to be scattered by the gas according to the second or third embodiment. The plurality of spatters are further preferably heated by the second laser beam to a degree that prevents all the spatters of the plurality of spatters from adhering to the machined workpiece and from solidifying on the machined workpiece.

According to a fifth embodiment of the present disclosure, in the laser piercing method according to any one of the first to fourth embodiments, the workpiece is heated by the second laser beam to a degree that prevents an outer side portion surrounding the peripheral portion from being pierced through.

According to a sixth embodiment of the present disclosure, in the laser piercing method according to the fifth embodiment, the part of the workpiece under the coating portion is melted by the first laser beam to a degree that prevents the outer side portion surrounding the peripheral portion from being pierced through.

According to a seventh embodiment of the present disclosure, in the laser piercing method according to the fifth embodiment or the sixth embodiment, the workpiece is heated by the second laser beam to a degree that prevents a spatter from occurring at the outer side portion surrounding the peripheral portion.

A laser-beam working machine according to an eighth embodiment of the present disclosure is defined in claim 8.

According to a ninth embodiment of the present disclosure, in the laser-beam working machine according to the eighth embodiment, the control circuit is configured to control the transfer mechanism and the second pump to spray the gas to a spatter made of the workpiece melted by the first laser beam and scattered to around the pierced hole by the gas. It is to be noted that the direction in which gas is sprayed to the spatter is preferably different from the direction in which the gas is sprayed to scatter the melted part of the workpiece.

According to a tenth embodiment of the present disclosure, in the laser-beam working machine according to the ninth embodiment, the control circuit is configured to control the transfer mechanism and the second pump to spray the gas to around the pierced hole while moving the torch along a circle surrounding the pierced hole.

According to an eleventh embodiment of the present disclosure, in the laser-beam working machine according to any one of the eighth to tenth embodiments, the second laser output density is such a degree of laser output density that causes the second laser beam to heat the workpiece to such a degree that a spatter made of the workpiece melted by the first laser beam and scattered to around the pierced hole by the gas is prevented from adhering to and solidifying on a hole defining part of the workpiece that has been machined which hole defining part defines the pierced hole. In a case that a plurality of spatters occur by the first laser beam, the laser output density may have such a degree that causes the second laser beam to heat the workpiece to a degree that prevents at least one spatter of the plurality of spatters from adhering to the machined workpiece and from solidifying on the machined workpiece. In this case, the laser output density may preferably have such a degree that causes the second laser beam to heat the workpiece to a degree that causes at least one spatter of the plurality of spatters to be scattered by the gas according to the second or third embodiment. Also, the laser output density may further preferably have such a degree that causes the second laser beam to heat the workpiece to a degree that causes all the spatters of the plurality of spatters to be scattered by the gas according to the second or third embodiment. The laser output density may further preferably have such a degree that causes the second laser beam to heat the workpiece to a degree that prevents all the spatters of the plurality of spatters from adhering to the machined workpiece and from solidifying on the machined workpiece. The eleventh embodiment is not encompassed by the wording of the claims but is considered as useful for understanding the invention.

According to a twelfth embodiment of the present disclosure, in the laser-beam working machine according to any one of the eighth to eleventh embodiments, the first laser output density is such a degree of laser output density that causes the first laser beam to heat the workpiece to a degree that prevents an outer side portion surrounding the peripheral portion from being pierced through, and the second laser output density is such a degree of laser output density that causes the second laser beam to heat the workpiece to a degree that prevents the outer side portion surrounding the peripheral portion from being pierced through. The twelfth embodiment is not encompassed by the wording of the claims but is considered as useful for understanding the invention.

According to a thirteenth embodiment of the present disclosure, in the laser-beam working machine according to the twelfth embodiment, the second laser output density is such a degree of laser output density that causes the second laser beam to heat the workpiece to a degree that prevents a spatter from occurring at the outer side portion surrounding the peripheral portion. The thirteenth embodiment is not encompassed by the wording of the claims but is considered as useful for understanding the invention.

In the laser piercing method according to the first embodiment, the base portion of the spatter is heated by the second laser beam. The second laser beam has a second laser output density lower than the output density of the first laser beam, by which the pierced hole has been opened. This prevents the base portion of the spatter from adhering to the part of the workpiece defining the periphery of the pierced hole, and thus makes the spatter easily removable. The laser-beam working machine according to the eighth embodiment is capable of heating the base portion of the spatter by the second laser beam, which has the second laser output density.

In the laser piercing method according to the second embodiment and the laser-beam working machine according to the ninth embodiment, a spatter is easily removable by gas since its base portion is heated to be kept from adhering to the workpiece.

In the laser piercing method according to the third embodiment and the laser-beam working machine according to the tenth embodiment, gas is sprayed from outside the spatter toward its base portion. This ensures that more spatters can be removed by gas.

In the laser piercing method according to the fourth embodiment and the laser-beam working machine according to the eleventh embodiment, a spatter is easily removable by gas since the base portion of the spatter is not adhered to the workpiece and not solidified on the workpiece.

If a portion of the workpiece located outside its heated region where the second laser beam is directed is pierced through, a base portion of a spatter resulting from the heating can not be heated directly by the second laser beam. As a result, the base portion is cooled and adheres to the workpiece. In the laser piercing method according to the fifth embodiment, the workpiece is heated by the second laser beam to a degree that the outside portion of the heated region is not pierced through. This configuration reduces the above-described adhesion risk. A similar adhesion problem occurs if the second laser beam is weak or if the heated region is small as compared with a pierced region, in which case the outside portion of the heated region may be pierced through by the first laser beam. In the laser piercing method according to the sixth embodiment, the workpiece is heated by the first laser beam to a degree that the outside portion of the heated region is not pierced through. This configuration further reduces the above-described adhesion risk. In the laser-beam working machine according to the twelfth embodiment, the workpiece is heated by the first laser beam and the second laser beam to a degree that the outside portion of the heated region is not pierced through. This configuration reduces the above-described risk.

Even if the outside portion of the heated region is not pierced through, there may be a case that the second laser beam melts a part of a peripheral portion of a pierced hole outside the region where the second laser beam is directed. If the melted part is scattered by assist gas, turning into a spatter, the base portion of the spatter can not be heated directly by the second laser beam. As a result, the base portion is cooled and adheres to the workpiece. In the laser piercing method according to the seventh embodiment and the laser-beam working machine according to the thirteenth embodiment, the workpiece is heated by the second laser beam to a degree that prevents a spatter from occurring at the outside of the machining region. This configuration reduces the above-described adhesion risk.

In the laser piercing method according to all embodiments and the laser-beam working machine according to all embodiments, the first laser beam and the second laser beam are generated by one laser oscillator. This configuration reduces the cost of production.

### Effects of Invention

The technique disclosed in the present application provides a laser piercing method and a laser-beam working machine that improve machining quality by preventing a base portion of a piercing-caused spatter from solidifying.

### Brief Description of Drawings

[FIG. 1] FIG. 1 is a schematic illustration of an exterior configuration of a laser-beam working machine according to an embodiment.
[FIG. 2] FIG. 2 is a cross-sectional view of a laser head of the laser-beam working machine according to the embodiment.
[FIG. 3] FIG. 3 is a schematic illustration of an internal configuration of an optical fiber according to the embodiment.
[FIG. 4A] FIG. 4A is a schematic illustration of an example of a laser beam output according to the embodiment.
[FIG. 4B] FIG. 4B is a schematic illustration of an example of a laser beam output according to the embodiment.
[FIG. 4C] FIG. 4C is a schematic illustration of an example of a laser beam output according to the embodiment.
[FIG. 5] FIG. 5 is a schematic illustration of a piercing method according to the embodiment.
[FIG. 6] FIG. 6 is another schematic illustration of the piercing method according to the embodiment.
[FIG. 7] FIG. 7 is a schematic illustration of a part of a laser beam which part is beyond a torch according to the embodiment.
[FIG. 8A] FIG. 8A is a schematic illustration of an example of an undesirable piercing method according to the embodiment.
[FIG. 8B] FIG. 8B is a schematic illustration of an example of an undesirable piercing method according to the embodiment.
[FIG. 9] FIG. 9 is a flowchart of the piercing method according to the embodiment.
[FIG. 10] FIG. 10 shows results of a verification experiment.

### Description of Embodiments

The present invention will now be described with reference to the accompanying drawings, wherein like reference numerals designate corresponding or identical elements throughout the various drawings.

### <Embodiment>

### <Configuration of Laser-beam Working Machine 1>

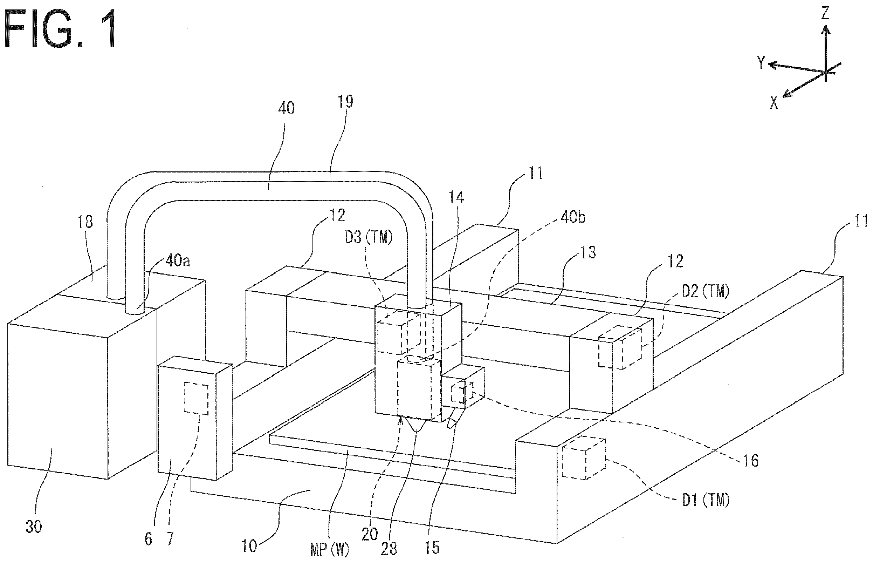

FIG. 1 is a schematic illustration of an exterior configuration of a laser-beam working machine 1 according to an embodiment of the present invention. An X axis illustrated in FIG. 1 extends in a depth direction of the laser-beam working machine 1, a Y axis extends in a width direction of the laser-beam working machine 1, and a Z axis extends in a height direction of the laser-beam working machine 1. In the following description, directions along the X axis, the Y axis, and the Z axis will be respectively referred to as X direction, Y direction, and Z direction. As illustrated in FIG. 1, the laser-beam working machine 1 includes a base 10, first guide rails 11, columns 12, a second guide rail 13, a saddle 14, a nozzle 15, a first pump 16, a laser head 20, a laser oscillator 30A, an optical fiber 40, and a numerical control apparatus 6. The laser-beam working machine 1 is an apparatus or a device that machines a metal plate MP on the base 10. Examples of the metal plate MP include soft steel, SUS, aluminum steel, brass, and copper. It is to be noted that the metal plate MP may be referred to as workpiece W. The base 10 may include a plurality of elongated projections. A pair of first guide rails 11 are mounted on the base 10, one first guide rail 11 being provided at one end of the base 10 in the Y direction and the other first guide rail 11 being provided at another end of the base 10 in the Y direction. One of the columns 12 is movably mounted on the one first guide rail 11, and another column 12 is movably mounted on the other first guide rails 11. Each column 12 is caused to move on the corresponding first guide rail 11 by, for example, driving force of a driver D1. The driver D1, such as a motor, is provided at the first guide rail 11 or the column 12.

The second guide rail 13 extends along the Y axis, which is orthogonal to the X axis, and is provided across the columns 12. The saddle 14 is mounted on second guide rail 13 movably in the Y direction. The saddle 14 is caused to move on the second guide rail 13 by, for example, driving force of a driver D2. The driver D2, such as a motor, is provided at the second guide rail 13 or the saddle 14. Each column 12 may be covered by a bellows cover, which is not illustrated. The laser head 20 is mounted on the saddle 14 movably in the Z direction, which extends along the Z axis, which is perpendicular to the X axis and the Y axis. The laser head 20 is caused to move on the saddle 14 by, for example, driving force of a driver D3. The driver D3, such as a motor, is provided at the saddle 14 or the laser head 20. The laser head 20 is configured to machine the metal plate MP on the base 10. The laser head 20 includes an optical system to which laser beams sent from the at least one laser oscillator 30 are introduced. The laser head 20 includes a torch 28. The torch 28 is used for laser machining purposes.

The nozzle 15 is configured to spray oil to the workpiece W before laser is radiated to the workpiece W by the laser head 20, described later. The first pump 16 is configured to send oil to the nozzle 15. The oil is stored in an oil tank, not illustrated. While in FIG. 1 the nozzle 15 and the first pump 16 are mounted on the saddle 14, the nozzle 15 and the first pump 16 may be mounted on the base 10. The at least one laser oscillator 30 outputs laser beams used to machine the metal plate MP. The optical fiber 40 telescopically connects the at least one laser oscillator 30 and the laser head 20 to each other to supply laser beams output from the at least one laser oscillator 30 to the laser head 20. The optical fiber 40 includes a first end 40a and a second end 40b. The first end 40a receives laser beams from the at least one laser oscillator 30. The second end 40b is opposite to the first end 40a. The numerical control apparatus 6 includes a control circuit 7. The control circuit 7 includes elements such as a hardware processor and a memory. The control circuit 7 is configured to control the at least one laser oscillator 30, the drivers M1 to M3, and the first pump 16 to machine the metal plate MP. In the following description of the embodiment, the driver D1 to D3 will be collectively referred to as transfer mechanism TM. The transfer mechanism TM is configured to move the torch 28.

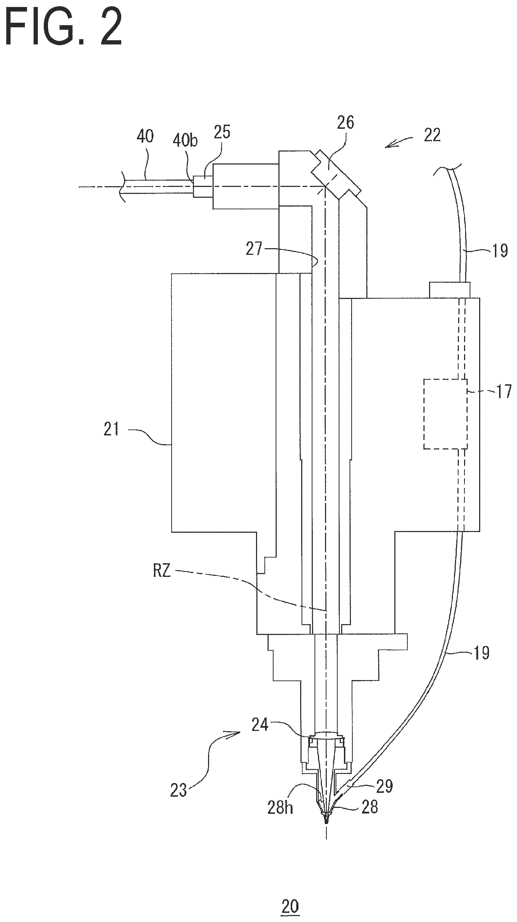

FIG. 2 is a cross-sectional view of the laser head 20 of the laser-beam working machine 1 according to the embodiment. Specifically, FIG. 2 is a cross-sectional view of the laser head 20 cut along a plane passing through an optical axis RZ of a laser beam radiated from the torch 28. By referring to FIG. 2, the optical system of the laser head 20 will be described. As illustrated in FIG. 2, the laser head 20 includes a head body 21, an upper unit 22, and a lower unit 23. The upper unit 22 is mounted on the head body 21. The upper unit 22 includes a connector 25 and a mirror 26. The connector 25 is a connector that connects the second end 40b of the optical fiber 40 to the laser head 20. It is to be noted that the mirror 26 reflects the laser beam output from the connector 25 toward the lower unit 23.

The lower unit 23 is mounted on the head body 21. The lower unit 23 includes a lens 24. The lens 24 is provided to face the second end 40b of the optical fiber 40, and is configured to focus, toward the workpiece W, the laser beam transmitted through the optical fiber 40. That is, the laser-beam working machine 1 includes the lens 24. It is to be noted that an additional lens may be provided between the connector 25 and the lens 24, which additional lens is not illustrated in FIG. 2, to focus the laser beam from the second end 40b of the optical fiber 40. The torch 28 is mounted on a leading end portion of the lower unit 23. An optical path 27 extends through the upper unit 22, the head body 21, the lower unit 23, and the torch 28 to pass the laser beam through the optical path 27.

As illustrated in FIG. 2, the laser-beam working machine 1 includes a second pump 17 at the head body 21. The second pump 17 is configured to send gas to the torch 28. The control circuit 7 is configured to control the second pump 17. An example of this gas is oxygen gas to promote melting of the workpiece W. Other examples include air, nitrogen gas, and argon gas. In the following description of the embodiment, the gas sent from the second pump will be referred to as assist gas AG. The assist gas AG is stored in a gas storage 18 (see FIG. 1), and is sent to the torch 28 via a gas supply conduit 19. The torch 28 includes a connector 29. Via the connector 29, the torch 28 is connected to the gas supply conduit 19. The torch 28 includes an opening 28h. The opening 28h is for the laser beam focused by the lens 24 and the gas to be sprayed to the workpiece W to pass.

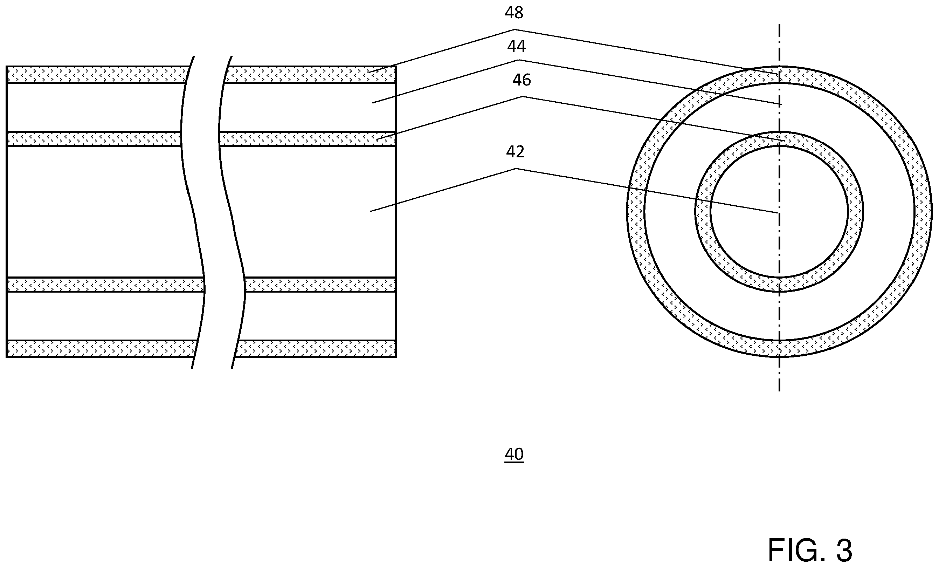

FIG. 3 is a schematic illustration of an internal configuration of the optical fiber 40 according to the embodiment. The optical fiber 40 includes a first transmission portion 42, a second transmission portion 44, a reflector 46, and an additional reflector 48. The first transmission portion 42 has a cylindrical shape, and is configured to permit a laser beam to transmit through the first transmission portion 42. The reflector 46 is a tubular member that covers the outer circumference of the first transmission portion 42, and is configured to reflect a laser beam at an interface with the first transmission portion 42. The second transmission portion 44 is a tubular member that covers the outer circumference of the reflector 46, and is configured to permit a laser beam to transmit through the second transmission portion 44. In other words, the second transmission portion 44 is provided around the first transmission portion 42. The reflector 46 is provided between the first transmission portion 42 and the second transmission portion 44. The reflector 46 is configured to reflect a laser beam an interface with the second transmission portion 44. The additional reflector 48 is a tubular member that covers the outer circumference of the second transmission portion 44, and is configured to reflect a laser beam at an interface with the second transmission portion 44.

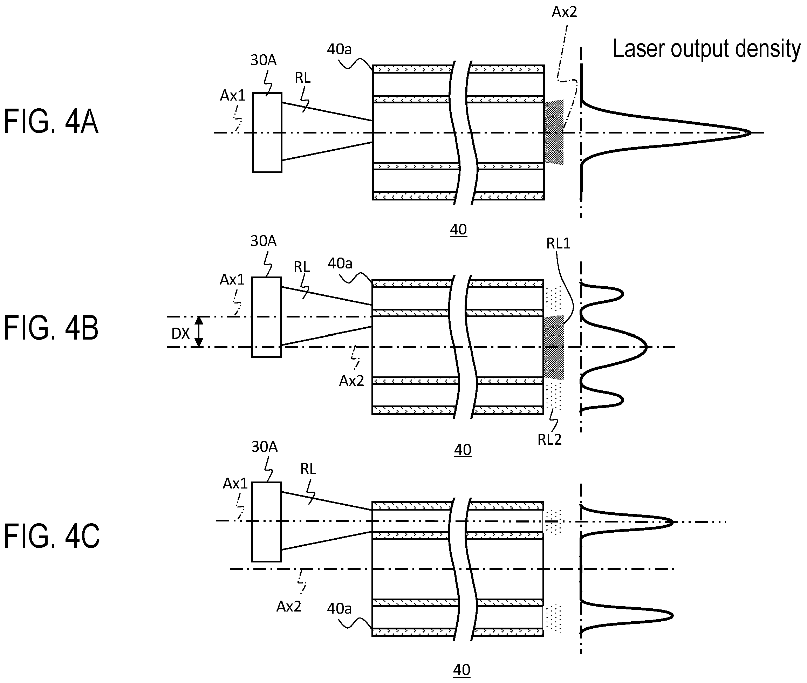

FIGs. 4A to 4C each are a schematic illustration of an example of output of a laser beam RL according to the embodiment. In this embodiment, the at least one laser oscillator 30 includes one laser oscillator 30A. The laser oscillator 30A emits the laser beam RL. The laser oscillator 30A is configured to change a positional relationship between an optical axis Ax1 and a center axis Ax2 in the manners illustrated in FIGs. 4A to 4C. The optical axis Ax1 is an optical axis of the laser beam RL output from the laser oscillator 30A. The center axis Ax2 is a center axis of the optical fiber 40. FIG. 4A is a schematic illustration of an example in which the optical axis Ax1 of the laser beam RL and the center axis Ax2 of the optical fiber 40 coincide with each other. FIG. 4B is a schematic illustration of an example in which the optical axis Ax1 of the laser beam RL extends through a part of the first transmission portion 42 which part is located slightly inward relative to the reflector 46. FIG. 4C is a schematic illustration of an example in which the optical axis Ax1 of the laser beam RL extends through a part of the second transmission portion 44 which part is located at or around the center of the second transmission portion 44.

On the right side of the figure of the optical fiber 40 in FIGs. 4A to 4C, laser output density level is illustrated. In FIGs. 4A to 4C, a greater laser output density is indicated by the graph line extending further to the right. In FIG. 4A, the laser beam RL does not strike the second transmission portion 44. Therefore, the laser output density is at its maximum at and around the center axis Ax2 of the optical fiber 40, and gradually decreases in a direction away from the center axis Ax2. FIG. 4B, illustrates a case that the optical fiber 40 is sufficiently long. In this case, due to the influence of irregular reflection at the reflector 46 and the additional reflector 48, the laser output density has two peaks, one at or around the center of the second transmission portion 44 and the other at and around the center axis Ax2 of the optical fiber 40. Specifically, the peak at and around the center axis Ax2 of the optical fiber 40 is larger than the peak at or around the center of the second transmission portion 44. In FIG. 4C, substantially no laser beam RL strikes the first transmission portion 42. Therefore, the laser output density has its peak only at or around the center of the second transmission portion 44. Alternatively, the peak at or around the center of the second transmission portion 44 is larger than the peak at and around the center axis Ax2 of the optical fiber 40.

In this embodiment, the laser oscillator 30A is positioned as illustrated in FIG. 4B to make the laser output density at the first transmission portion 42 larger than the laser output density at the second transmission portion 44. That is, the direction of the laser beam RL emitted from the one laser oscillator 30A is adjusted so that a part of the laser beam RL enters the first transmission portion 42 and another part of the laser beam RL enters the second transmission portion 44. In other words, a first laser beam RL1 and a second laser beam RL2 are generated by emitting the laser beam RL from the one laser oscillator 30A in such a manner that a part of the laser beam RL enters the first transmission portion 42 and another part of the laser beam RL enters the second transmission portion 44. In the following description of the embodiment, the laser beam output from the first transmission portion 42 referred to as first laser beam RL1, and the laser beam output from the second transmission portion 44 will be referred to second laser beam RL2. Thus, the at least one laser oscillator 30 is configured to emit the first laser beam RL1 and the second laser beam RL2. The first transmission portion 42 permits the first laser beam RL1 to transmit through the first transmission portion 42. The second transmission portion 44 permits the second laser beam RL2 to transmit through the second transmission portion 44.

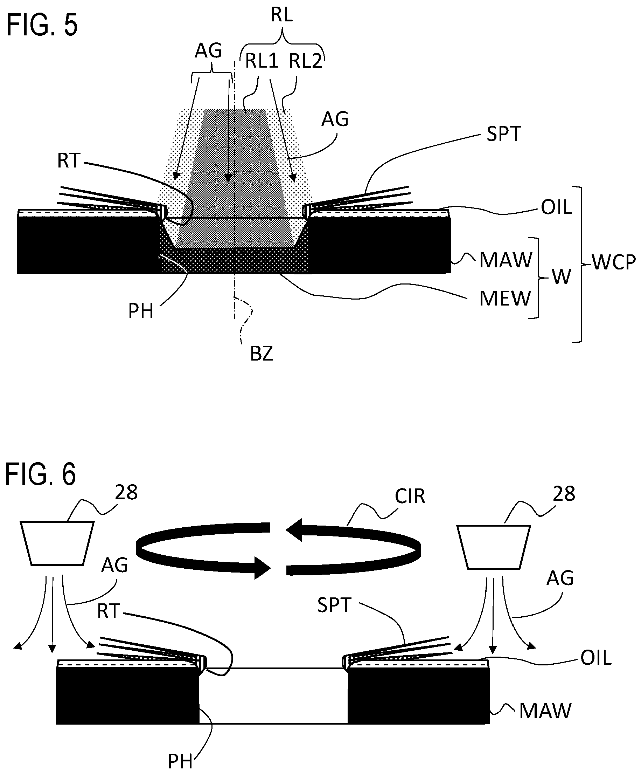

FIG. 5 is a schematic illustration of a piercing method according to the embodiment. In this embodiment, as illustrated in FIG. 5, the control circuit 7 is configured to control the first pump 16 to spray oil OIL to the workpiece W to generate a coating portion WCP of oil OIL on the workpiece W. Then, the control circuit 7 is configured to control the at least one laser oscillator 30 to radiate the first laser beam RL1 and the second laser beam RL2 to the coating portion WCP. At the same time, the control circuit 7 is configured to control the second pump 17 to spray gas (assist gas AG) to a part MEW of the workpiece W which part MEW has been melted by the first laser beam RL1. Thus, the control circuit 7 causes a pierced hole PH to be opened in the workpiece W. In particular, the control circuit 7 is configured to control the second laser beam RL2 to heat a base portion RT of each spatter SPT. The spatter SPT is a scatter around the pierced hole PH and generated by the spraying of the gas (assist gas AG) to the melted part MEW of the workpiece W. The melted part MEW of the workpiece W is intended to mean a part of the workpiece W which part has been heated to a level of viscosity low enough to be scattered by the assist gas AG. The base portion RT is intended to mean a part of the spatter SPT which part contacts, without intervention of the oil OIL, a hole defining part of a machined workpiece MAW. The workpiece MAW is a workpiece into which the workpiece W has been machined. The hole defining part defines the pierced hole PH.

FIG. 6 is another schematic illustration of the piercing method according to the embodiment. In this embodiment, the workpiece W's part MEW, which has been melted by the first laser beam RL1, is scattered to around the pierced hole PH by gas (for example, the assist gas AG) to become spatters SPT as illustrated in FIG. 6. The control circuit 7 is configured to control the transfer mechanism TM and the second pump 17 to further spray the gas (for example, the assist gas AG) to each spatter SPT. It is to be noted that the direction of the spraying of the gas to each spatter SPT is different from the direction of the spraying of the gas to the melted part MEW of the workpiece W. It is also to be noted that the gas sprayed to each spatter SPT may be different from the gas used to scatter the melted part of the workpiece. Specifically, as illustrated in FIG. 6, the control circuit 7 is configured to control the TM and the second pump 17 to spray gas (for example, the assist gas AG) to around the pierced hole PH while moving the torch 28 along a circle CIR. The circle CIR surrounds the pierced hole PH.

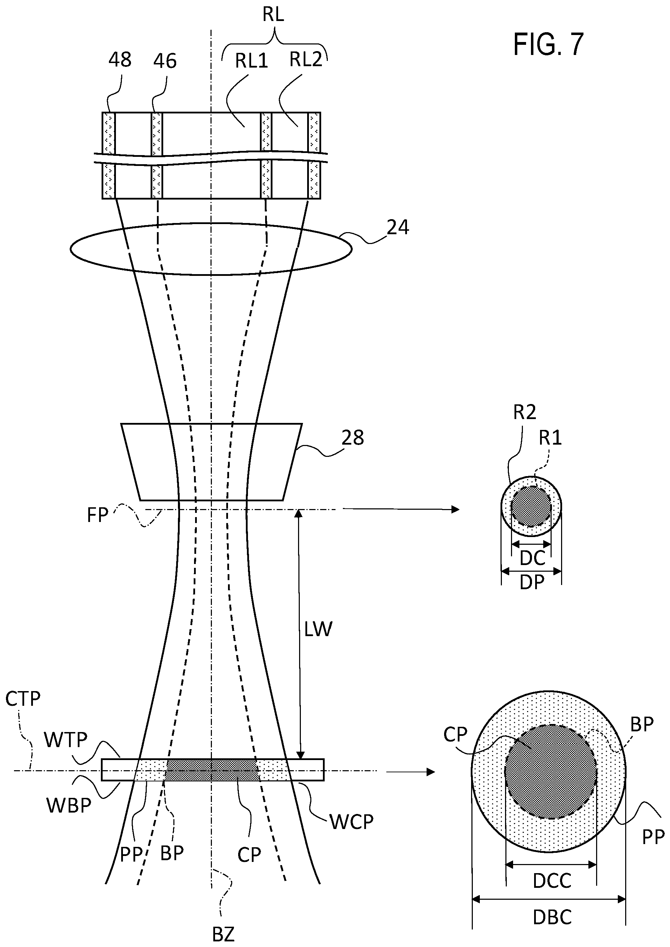

FIG. 7 is a schematic illustration of a part of the laser beam RL which part is beyond the torch 28 according to the embodiment. As illustrated in FIG. 7, the laser beam RL is focused most narrowly at a focal point FP, and is slightly widened when striking the surface of the coating portion WCP. A part of the coating portion WCP which part is irradiated with the first laser beam RL1 will be referred to as center portion CP, and another part of the coating portion WCP which part is irradiated with the second laser beam RL2 will be referred to as peripheral portion PP. The peripheral portion PP surrounds the center portion CP in a radial direction relative to the optical axis RZ of the laser beam RL. The boundary between the center portion CP and the peripheral portion PP may be determined based on a position on the workpiece W to which a laser beam imaginarily emitted from the reflectors 46 and 48 of the optical fiber 40 reaches. It is to be noted that as illustrated in FIG. 7, the assist gas AG is sprayed from the torch 28 to reach both of the center portion CP and the peripheral portion PP.

In this respect, the laser output density of the first laser beam RL1 in the center portion CP will be referred to as first laser output density, and the laser output density of the second laser beam RL2 in the peripheral portion PP will be referred to second laser output density. The first laser output density is larger than the second laser output density. Also, the laser output density at a boundary portion BP (where the principle described by referring to FIG. 4B applies) of the coating portion WCP between the center portion CP and the peripheral portion PP will be referred to third laser output density. The third laser output density is smaller than the first laser output density and the second laser output density.

It is to be noted that due to expanding characteristics of the first laser beam RL1 and the second laser beam RL2, each of the first to third laser output densities varies between the top portion WTP of the workpiece W and the bottom portion WBP of the workpiece W. Specifically, the diameter of the center portion CP at the top portion WTP of the workpiece W is smaller than the diameter of the center portion CP at the bottom portion WBP of the workpiece W. The diameter, DBT, of the peripheral portion PP at the top portion WTP of the workpiece W is smaller than the diameter, DBB, of the peripheral portion PP at the bottom portion WBP of the workpiece W. Therefore, the first to third laser output densities at the top portion WTP of the workpiece W are respectively larger than the first to third laser output densities at the bottom portion WBP of the workpiece W. From a micro-scale point of view, the laser output density at each of the center portion CP, the peripheral portion PP, and the boundary portion BP on the same plane varies throughout each portion. In this embodiment, however, each of the first to third laser output densities is an average of laser output densities throughout each of the center portion CP, the peripheral portion PP, and the boundary portion BP, which are determined based on an imaginary optical path between the reflectors 46 and 48.

In this embodiment, the first to third laser output densities are determined based on a cross-section of the workpiece W cut along a center plane CTP between the top portion WTP and the bottom portion WBP of the workpiece W. Specifically, the first laser output density is an average of laser output densities throughout the cross-section of the center portion CP, the second laser output density is an average of laser output densities throughout the cross-section of the peripheral portion PP, and the third laser output density is an average of laser output densities throughout the cross-section of the boundary portion BP. When the torch 28 opens the pierced hole PH while moving in a direction (Z direction) along the optical axis RZ, the average of each of the first to third laser output densities is defined as the each laser output density. In the example illustrated in FIG. 7, the center portion CP may be regarded as a solid-cylindrical shape whose diameter is equivalent to the diameter, DCC, of the cross-section at the center plane CTP; and the peripheral portion PP may be regarded as a tubular shape whose outer diameter and inner diameter are respectively equivalent to the outer diameter DBC and the inner diameter *DCC* of the cross-section at the center plane CTP.

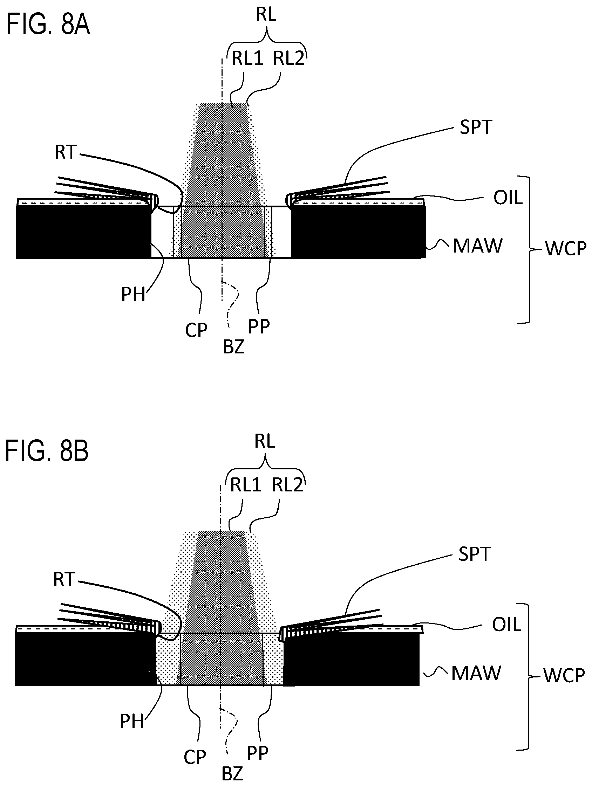

The first laser output density and the second laser output density are determined based on the output of the at least one laser oscillator 30 (the laser oscillator 30A), the shift, *DX* (see FIG. 4B), between the optical axis Ax1 of the laser beam RL and the center axis Ax2 of the optical fiber 40, and the distance, *LW,* between the focal point FP and the coating portion WCP. The control circuit 7 is capable of controlling the at least one laser oscillator 30 and the position of the torch 28 to adjust these values. In this embodiment, the first laser output density and the second laser output density satisfy the following conditions.
[Condition 1] The first laser output density and the second laser output density are determined to a degree that the center portion CP is pierced through by the first laser beam RL1 and the second laser beam RL2. This condition is judged by determining whether the center portion CP is pierced through when the laser beam RL, which includes the first laser beam RL1 and the second laser beam RL2, is radiated to the workpiece W. It is to be noted that the first laser output density and the second laser output density may also be determined in view of the fact that the workpiece W is also heated by the assist gas AG.
[Condition 2] The first laser output density is such a degree of laser output density that causes the first laser beam RL1 to heat the workpiece W to a degree that an outer side portion of the workpiece W which outer side portion surrounds the peripheral portion PP is not pierced through. This condition is not satisfied if the output of the first laser beam RL1 is so intense that the outer side portion surrounding the peripheral portion PP is melted, or if the peripheral portion PP is too small. As illustrated in FIG. 8A, if the outer side portion surrounding the peripheral portion PP is pierced through by the first laser beam RL1, the base portion RT of the spatter SPT can not be heated by the second laser beam RL2. In this case, the base portion RT of the spatter SPT solidifies, adhering to the machined workpiece MAW. The first laser output density is determined to avoid this situation. The first laser output density may also be determined in view of the fact that the workpiece W is also heated by the assist gas AG.
[Condition 3] The second laser output density is such a degree of laser output density that causes the second laser beam RL2 to heat the workpiece W to a degree that the outer side portion surrounding the peripheral portion PP is not pierced through. This condition is not satisfied if the output of the second laser beam RL2 is so intense that the outer side portion surrounding the peripheral portion PP is melted. This condition, similarly to the above condition, is imposed to avoid such a situation that as illustrated in FIG. 8A, the base portion RT of the spatter SPT can not be heated by the second laser beam RL2, causing the base portion RT of the spatter SPT to adhere to the machined workpiece MAW and solidify on the machined workpiece MAW. In this case, the second laser output density may also be determined in view of the fact that the workpiece W is also heated by the first laser beam RL1 and the assist gas AG.
[Condition 4] The second laser output density is such a degree of laser output density that causes the second laser beam RL2 to heat the workpiece W to a degree that prevents the spatter SPT from adhering to the machined workpiece MAW which hole defining part defines the pierced hole PH, and from solidifying on the machined workpiece MAW, after the workpiece W's part MEW, which has been melted by the first laser beam RL1, has been scattered to around the pierced hole PH by gas (assist gas AG) to become the spatter SPT. If the second laser output density is so weak that the base portion RT of the spatter SPT adheres to the hole defining part of the machined workpiece MAW, the spatter SPT can not be removed from the hole defining part of the machined workpiece MAW even if gas (assist gas AG) is sprayed to the spatter SPT in the manner illustrated in FIG. 6. In this case, the second laser output density may also be determined in view of the fact that the workpiece W is also heated by the first laser beam RL1 and the assist gas AG.
[Condition 5] The second laser output density is such a degree of laser output density that causes the second laser beam RL2 to heat the workpiece to a degree that prevents a spatter from occurring at the outer side portion surrounding the peripheral portion PP. The intensity of the second laser output density is insufficient to pierce through the outer side portion surrounding the peripheral portion PP. The second laser output density, however, is lower than a laser output density that causes the situation illustrated in FIG. 8B. In FIG. 8B, the second laser beam RL2 melts a part of the outer side portion surrounding the peripheral portion PP, and the melted part of the outer side portion has such a viscosity that causes the melted part to be scattered by the assist gas AG. In the situation illustrated in FIG. 8B, the base portion RT of the spatter SPT can not be heated by the second laser beam RL2, causing the base portion RT of the spatter SPT to adhere to the machined workpiece MAW and solidify on the machined workpiece MAW. The second laser output density is determined to avoid this situation. In this case as well, the second laser output density may also be determined in view of the fact that the workpiece W is also heated by the first laser beam RL1 and the assist gas AG.

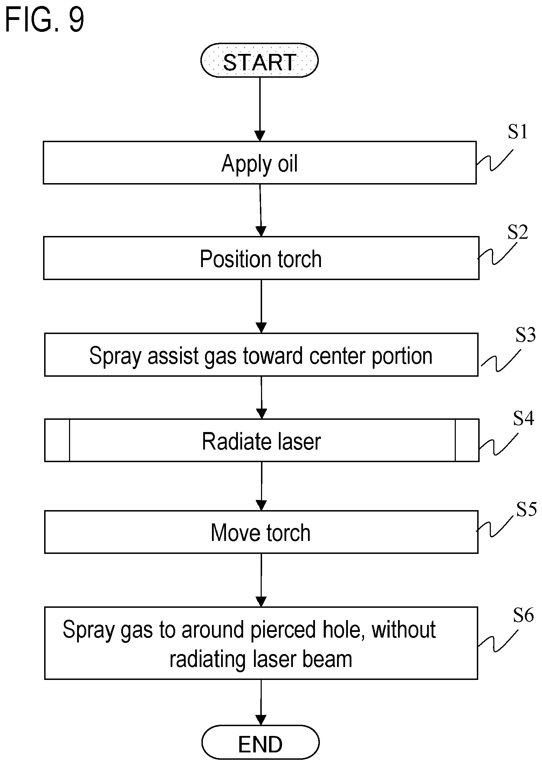

FIG. 9 is a flowchart of the laser piercing method according to the embodiment. At step S1, the method includes spraying the oil OIL to the workpiece W to generate the coating portion WCP, is a cover of the oil OIL over the workpiece W. At step S2, the method includes positioning the torch 28 relative to the workpiece W to align the center portion CP with a target position on the workpiece W. Specifically, the method includes: setting the laser output density of the laser beam RL to the first laser output density at the coating portion WCP's center portion CP, which is irradiated with the laser beam RL; setting the laser output density of the laser beam RL to the second laser output density, which is smaller than the first laser output density, at the coating portion WCP's peripheral portion PP, which surrounds the center portion CP; and setting the laser output density of the laser beam RL to the third laser output density, which is smaller than the first laser output density and the second laser output density, at the coating portion WCP's boundary portion BP, which is between the center portion CP and the peripheral portion PP.

At step S3, the method includes spraying, from the torch 28, the assist gas AG toward the positioned center portion CP of the workpiece W. At step S4, to satisfy [Condition 1] through [Condition 5], the method includes adjusting the output of the laser oscillator 30A and the shift *DX* between the optical axis Ax1 of the laser beam RL and the center axis Ax2 of the optical fiber 40, and radiates the laser beam RL toward the coating portion WCP. By this method, the first laser beam RL1, which is radiated to the center portion CP, melts a part of the workpiece W, which is provided under the coating portion WCP, and gas (assist gas AG) is sprayed to the melted part MEW of the workpiece W to scatter the melted part MEW of the workpiece W to around the center portion CP. In this manner, the pierced hole PH is opened in the coating portion WCP. Specifically, the method includes causing the first laser beam RL1 to melt a part of the workpiece W, which is provided under the coating portion WCP, to a degree that the outer side portion surrounding the peripheral portion PP is not pierced through.

The method also includes causing the second laser beam RL2, which is radiated to the peripheral portion PP, to heat the base portion RT of the spatter SPT. The base portion RT is the scattered part of the workpiece W and contacts, without intervention of the oil OIL, the hole defining part of the machined workpiece MAW which hole defining part defines the pierced hole PH. Specifically, the method includes causing the second laser beam RL2 to heat the spatter SPT to a degree that prevents the spatter SPT from adhering to the machined workpiece MAW and from solidifying on the machined workpiece MAW. The method further includes causing the second laser beam RL2 to heat the workpiece W to a degree that the outer side portion surrounding the peripheral portion PP is not pierced through. The method includes causing the second laser beam RL2 to heat the workpiece W to a degree that a spatter SPT does not occur at the outer side portion surrounding the peripheral portion PP.

At step S5, the method includes, after heating the base portion RT of the spatter SPT, moving the torch 28 that is spraying gas (assist gas AG) along a circle surrounding the base portion RT from outside the base portion RT. In this respect, the method may include a motion of raising and lowering the torch 28 to float the spatter SPT. At step S6, the method includes, without radiating the laser beam RL, spraying gas (assist gas AG) from the torch 28 to around the base portion RT. By this method, which includes spraying gas (assist gas AG) to the spatter SPT, the spatter SPT is removed from the machined workpiece MAW.

### <Verification experiment>

The following verification experiment was conducted in order to verify the effectiveness of the above-described laser piercing method and the effectiveness of the above-described conditions. The metal plate MP used in the experiment is a SS400 steel having a plate thickness of 9.0 mm. The position of the torch 28 is adjusted such that the top portion WTP of the workpiece W is positioned at a height of 8.5 mm from the focal point. At the focal point, the first laser beam RL1 passes through a region R1. The region R1 has a diameter *DC* (see FIG. 7) of 0.234 mm. Also at the focal point, the second laser beam RL2 passes through a region R2. The region R2 has a diameter *DP* (see FIG. 7) of 0.806 mm. The center plane CTP of the workpiece W, the center portion CP has a diameter *DC*C of 1.066 mm. At the center plane CTP of the workpiece W, the peripheral portion PP has a diameter DBC of 1.492 mm. As a preparation, the optical axis Ax1 of the laser beam RL is positioned in the manner illustrated in FIG. 8A. Then, the laser oscillator 30A opens a punched hole in the metal plate MP by heating the metal plate MP for 0.1 seconds at 1000W and a duty ratio of 15%. Then, the shift *DX* between the optical axis Ax1 and the center axis Ax2 was changed, and the laser oscillator 30A was caused to output the laser beam RL at 9000W and a duty ratio of 25%. It is to be noted that the air pressure of the assist gas sprayed at step S3 is 0.4 MPa.

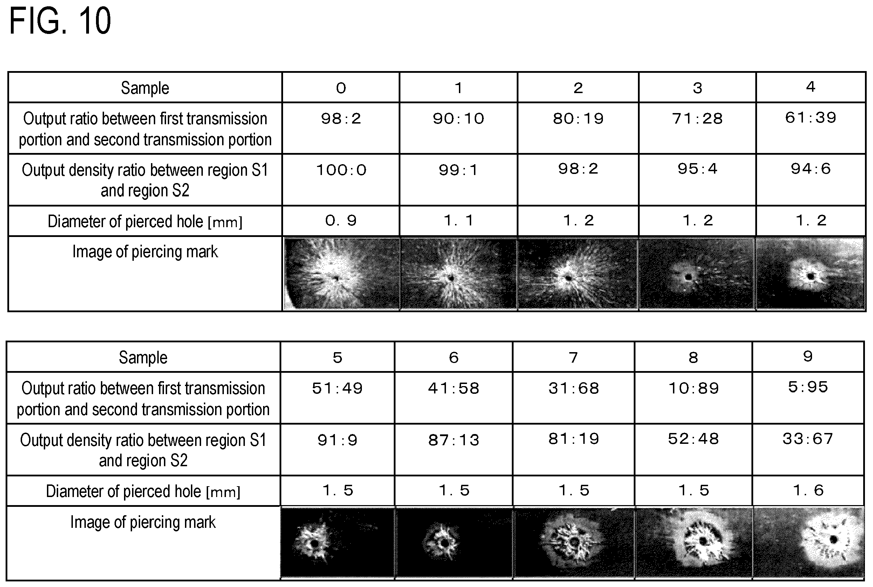

Pierced holes were opened each with a different output ratio between the first transmission portion 42 and the second transmission portion 44 in accordance with the shift *DX.* FIG. 10 illustrates the diameters of the pierced holes and images of piercing marks. The images of piercing marks and the diameters of the pierced holes illustrated in FIG. 10 are equivalent to results of the processings up to step S4. In all samples 1 to 9, the generated pierced hole has a hole diameter of greater than 1.1 mm. Therefore, samples 1 to 9 satisfy [Condition 1]. In all samples 5 to 9, the generated pierced hole has a hole diameter of greater than 1.4 mm. In view of the fact that the first laser output density in these samples is smaller than the first laser output density in sample 4, these samples do not satisfy [Condition 3]. In sample 0, the second laser output density is substantially small. Therefore, sample 0 do not satisfy [Condition 4].

In samples 1 to 3, as the sample number increases, the number of spatters SPT increases whose base portions RT are heated ideally, and the number of such spatters SPT decreases by being removed by the assist gas sprayed at step S3. Samples 1 to 3 satisfy [Condition 1] through [Condition 5]. As the sample number increases, [Condition 4] is satisfied more ideally. Sample 3 satisfies [Condition 4] more ideally. In this case, the strength of the base portion of the spatter SPT can be degraded enough to enable the spatter SPT to be removed only by the air pressure of the assist gas sprayed at step S3.

In sample 4, the second laser output density increased to a degree that [Condition 5] is not satisfied, resulting in the situation illustrated in FIG. 8B. As a result, some spatters remained unremoved by the assist gas sprayed at step S3. It is to be noted that in sample 4, the spatters may not necessarily be removed as in the above-described experiment result, and thus it is possible to perform steps S5 and S6 later to remove the spatters SPT completely.

As has been described hereinbefore, whether [Condition 1] through [Condition 3] are satisfied can be judged by comparing the diameter of the actually opened pierced hole with a theoretically obtained diameter of the center portion CP and a theoretically obtained diameter of the peripheral portion PP of the workpiece W. The judgment as to whether the pierced hole PH exists at the outer side portion surrounding the peripheral portion PP for [Condition 2] and [Condition 3] is done by taking into consideration a reasonable measurement error and a reasonable difference between a theoretically value and an actually measured value. In a case that the existence of the pierced hole PH at the outer side portion surrounding the peripheral portion PP is clearly confirmed even if such error and difference is taken into consideration, [Condition 2] or [Condition 3] is determined as unsatisfied.

Whether [Condition 4] is satisfied can be judged by comparing the amount of spatter with the amount of spatter in a case that the second laser output density is substantially 0 to determine whether the amount of spatter is decreased. As used herein, the case that the second laser output density is substantially 0 is intended to mean a case that the optical axis Ax1 of the laser beam RL output from the laser oscillator 30A is set to align with the center axis Ax2 of the optical fiber 40, and the laser beam RL is output.

Whether [Condition 5] is satisfied can be judged by: increasing the second laser output density stepwise; and determining whether the amount of spatter has increased as compared with the amount of spatter in the immediately previous step, even though the diameter of the pierced hole remains unchanged.

### <Features and Effects of the Laser Piercing Method according to this Embodiment>

In the laser piercing method and the laser-beam working machine 1 according to this embodiment, the base portion RT of the spatter SPT is heated by the second laser beam RL2, which is radiated to the peripheral portion PP. The spatter SPT is equivalent to the scattered part of the workpiece W and contacts, without intervention of the oil OIL, the hole defining part of the machined workpiece MAW which hole defining part defines the pierced hole PH. With this configuration, the laser piercing method and the laser-beam working machine 1 prevent the base portion RT from solidifying, making it easy to remove the spatter SPT. As a result, the quality of the machining improves.

### <Modifications>

The manner of moving the torch 28 at step S5 will not be limited to along the circle CIR; the manner of moving may be along an ellipse or may be such that the torch 28 is moved toward or away from the workpiece W during rotation.

In the above-described embodiment, the laser-beam working machine 1 is described as machining the metal plate MP. The embodiment, however, is also applicable to a laser-beam working machine that machines any other material such as a pipe. In this case, the laser head 20 may be rotatable about rotation axes respectively parallel to the X axis and the Y axis in order to be capable of three-dimensional machining.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

In the present disclosure, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

## Claims

1. A laser piercing method comprising:
spraying oil (OIL) to a workpiece (W) to generate a coating portion (WCP) made of the oil (OIL) over the workpiece (W);
preparing an optical fiber (40) that comprises a first transmission portion (42), a second transmission portion (44) provided around the first transmission portion (42), and a reflector (46) provided between the first transmission portion (42) and the second transmission portion (44);
generating a first laser beam (RL1) and a second laser beam (RL2) by emitting a laser beam (RL) from a laser oscillator (30A) such that a part of the laser beam (RL) enters the first transmission portion (42) and another part of the laser beam (RL) enters the second transmission portion (44), wherein the laser oscillator (30A) is configured to change a positional relationship between an optical axis (Ax1) of the laser beam (RL), output from the laser oscillator (30A), and a center axis (Ax2) of the optical fiber (40), wherein the laser beam (RL) output from the first transmission portion (42) is referred to as the first laser beam (RL1), and the laser beam (RL) output from the second transmission portion (44) is referred to as the second laser beam (RL2);
radiating the laser beam (RL) to the coating portion (WCP) to:
set a laser output density of the first laser beam (RL1) to a first laser output density at a center portion (CP) of the coating portion (WCP), which center portion (CP) is to be irradiated with the laser beam (RL);
set the laser output density of the second laser beam (RL2) to a second laser output density at a peripheral portion (PP) of the coating portion (WCP), which peripheral portion (PP) surrounds the center portion (CP), the second laser output density being smaller than the first laser output density; and
set the laser output density to a third laser output density at a boundary portion (BP) of the coating portion (WCP), which boundary portion (BP) is between the center portion (CP) and the peripheral portion (PP), the third laser output density being smaller than the second laser output density;
opening a pierced hole (PH) through the coating portion (WCP) by:
melting a part of the workpiece (W) under the coating portion (WCP) by the first laser beam (RL1), among the laser beam (RL), that is to be radiated to the center portion (CP); and
spraying gas (AG) to a melted part (MEW) of the workpiece (W) to scatter the melted part (MEW) of the workpiece (W) to around the center portion (CP); and
heating a base portion (RT) of a spatter (SPT) by the second laser beam (RL2), among the laser beam (RL), that is to be radiated to the peripheral portion (PP), the spatter (SPT) being made of a scattered part of the workpiece (W) and contacting, without intervention of the oil (OIL), a machined workpiece (MAW) that is a part of the workpiece (W) that has been machined, which defines the pierced hole (PH).

2. The laser piercing method according to claim 1, further comprising, after heating the base portion (RT), spraying the gas (AG) to the spatter (SPT) to remove the spatter (SPT) from the machined workpiece (MAW).

3. The laser piercing method according to claim 2, wherein removing the spatter (SPT) from the machined workpiece (MAW) comprises spraying the gas (AG) to around the base portion (RT) through a torch (28) while moving the torch (28) along a circle (CIR) surrounding the base portion (RT) from outside the base portion (RT).

4. The laser piercing method according to any one of claims 1 to 3, wherein the spatter (SPT) is to be heated by the second laser beam (RL2) to a degree that prevents the spatter (SPT) from adhering to the machined workpiece (MAW) and from solidifying on the machined workpiece (MAW).

5. The laser piercing method according to any one of claims 1 to 4, wherein the workpiece (W) is to be heated by the second laser beam (RL2) to a degree that prevents an outer side portion of the workpiece (W) from being pierced through, the outer side portion surrounding the peripheral portion (PP).

6. The laser piercing method according to claim 5, wherein the part of the workpiece (W) under the coating portion (WCP) is to be melted by the first laser beam (RL1) to a degree that prevents the outer side portion surrounding the peripheral portion (PP) from being pierced through.

7. The laser piercing method according to claim 5 or 6, wherein the workpiece (W) is to be heated by the second laser beam (RL2) to a degree that prevents a spatter (SPT) from occurring at the outer side portion surrounding the peripheral portion (PP).

8. A laser-beam working machine (1) comprising:
a laser oscillator (30A) configured to generate a first laser beam (RL1) and a second laser beam (RL2) by emitting a laser beam (RL);
an optical fiber (40) having a first end (40a) at which the first laser beam (RL1) and the second laser beam (RL2) are to be received from the laser oscillator (30A) and having a second end (40b) opposite to the first end (40a), the optical fiber (40) comprising:
a first transmission portion (42) through which the first laser beam (RL1) is to be passed;
a second transmission portion (44) which is provided around the first transmission portion (42) and through which the second laser beam (RL2) is to be passed; and
a reflector (46) provided between the first transmission portion (42) and the second transmission portion (44);
a lens (24) provided to face the second end (40b) of the optical fiber (40) and configured to focus the first laser beam (RL1) and the second laser beam (RL2) toward a workpiece (W) after the first laser beam (RL1) and the second laser beam (RL2) have been transmitted through the optical fiber (40);
a torch (28) having an opening (28h) through which the beams (RL1, RL2) focused by the lens (24) and gas (AG) to be sprayed to the workpiece (W) are passed;
a transfer mechanism (TM) configured to move the torch (28);
a nozzle (15) configured to spray oil (OIL) to the workpiece (W);
a first pump (16) configured to send the oil (OIL) to the nozzle (15);
a second pump (17) configured to send the gas (AG) to the torch (28); and
a control circuit (7) configured to control the laser oscillator (30A), the first pump (16), the second pump (17), and the transfer mechanism (TM),
wherein the control circuit (7) is configured to:
control the first pump (16) to spray the oil (OIL) to the workpiece (W) to generate a coating portion (WCP) made of the oil (OIL) over the workpiece (W); and
then control the laser oscillator (30A) and the second pump (17) to radiate the laser beam (RL) to the coating portion (WCP) and spray the gas (AG) to the workpiece (W) melted by the first laser beam (RL1) to open a pierced hole (PH) through the coating portion (WCP),
wherein the laser oscillator (30A) is configured to change a positional relationship, which is a shift (DX), between an optical axis (Ax1) of the laser beam (RL), output from the laser oscillator (30A), and the center axis (Ax2) of the optical fiber (40), such that, in use, a part of the laser beam (RL) enters the first transmission portion (42) and another part of the laser beam (RL) enters the second transmission portion (44); wherein the laser beam (RL) output from the first transmission portion (42) is referred to as the first laser beam (RL1), and the laser beam (RL) output from the second transmission portion (44) is referred to as the second laser beam (RL2);
wherein the control circuit (7) is further configured to:
control the laser oscillator (30A) and a position of the torch (28), to adjust
an output of the laser oscillator (30A),
the shift (DX), and
a distance (LW), between a focal point (FP) and the coating portion (WCP),
to determine a first laser output density and a second laser output density, such that
a laser output density of the first laser beam (RL1) at a center portion (CP) of the coating portion (WCP), which center portion (CP) is to be irradiated with the laser beam (RL), is set to the first laser output density, a laser output density of the second laser beam (RL2) at a peripheral portion (PP) of the coating portion (WCP), which peripheral portion (PP) is to be irradiated with the second laser beam (RL2), is set to the second laser output density that is smaller than the first laser output density, and a laser output density at a boundary portion (BP) of the coating portion (WCP), which boundary portion (BP) is between the center portion (CP) and the peripheral portion (PP), is set to a third laser output density that is smaller than the second laser output density.

9. The laser-beam working machine (1) according to claim 8, wherein the control circuit (7) is configured to control the transfer mechanism (TM) and the second pump (17) to further spray the gas (AG) to a spatter (SPT) made of the workpiece (W) melted by the first laser beam (RL1) and scattered to around the pierced hole (PH) by the gas (AG).

10. The laser-beam working machine (1) according to claim 9, wherein the control circuit (7) is configured to control the transfer mechanism (TM) and the second pump (17) to spray the gas (AG) to around the pierced hole (PH) while moving the torch (28) along a circle (CIR) surrounding the pierced hole (PH).

## Patentansprüche

1. Laser-Schneidverfahren, das Folgendes umfasst:
Aufsprühen von Öl (OIL) auf ein Werkstück (W), um einen Beschichtungsbereich (WCP) aus dem Öl (OIL) auf dem Werkstück (W) zu erzeugen;
Bereitstellen einer optischen Faser (40), die einen ersten Übertragungsbereich (42), einen um den ersten Übertragungsbereich (42) herum vorgesehenen zweiten Übertragungsbereich (44) und einen zwischen dem ersten Übertragungsbereich (42) und dem zweiten Übertragungsbereich (44) vorgesehenen Reflektor (46) umfasst;
Erzeugen eines ersten Laserstrahls (RL1) und eines zweiten Laserstrahls (RL2) durch Aussenden eines Laserstrahls (RL) aus einem Laseroszillator (30A) derart, dass ein Teil des Laserstrahls (RL) in den ersten Übertragungsbereich (42) eintritt und ein anderer Teil des Laserstrahls (RL) in den zweiten Übertragungsbereich (44) eintritt, wobei der Laseroszillator (30A) gestaltet ist, um eine Positionsbeziehung zwischen einer optischen Achse (Ax1) des vom Laseroszillator (30A) ausgegebenen Laserstrahls (RL) und einer Mittelachse (Ax2) der optischen Faser (40) zu ändern, wobei der aus dem ersten Übertragungsbereich (42) ausgegebene Laserstrahl (RL) als erster Laserstrahl (RL1) und der aus dem zweiten Übertragungsbereich (44) ausgegebene Laserstrahl (RL) als zweiter Laserstrahl (RL2) bezeichnet wird;
Bestrahlen des Beschichtungsbereichs (WCP) mit dem Laserstrahl (RL), um:
eine Laserleistungsdichte des ersten Laserstrahls (RL1) auf eine erste Laserleistungsdichte an einem Mittelbereich (CP) des Beschichtungsbereichs (WCP) einzustellen, wobei der Mittelbereich (CP) mit dem Laserstrahl (RL) zu bestrahlen ist;
die Laserleistungsdichte des zweiten Laserstrahls (RL2) auf eine zweite Laserleistungsdichte an einem Randbereich (PP) des Beschichtungsbereichs (WCP) einzustellen, wobei der Randbereich (PP) den Mittelbereich (CP) umgibt und die zweite Laserleistungsdichte kleiner als die erste Laserleistungsdichte ist; und
die Laserleistungsdichte auf eine dritte Laserleistungsdichte an einem Grenzbereich (BP) des Beschichtungsbereichs (WCP) einzustellen, wobei sich der Grenzbereich (BP) zwischen dem Mittelbereich (CP) und dem Randbereich (PP) befindet und die dritte Laserleistungsdichte kleiner als die zweite Laserleistungsdichte ist;
Öffnen eines Durchbruchlochs (PH) durch den Beschichtungsbereich (WCP) hindurch:
Schmelzen eines Teils des Werkstücks (W) unter dem Beschichtungsbereich (WCP) durch den ersten Laserstrahl (RL1), aus dem Laserstrahl (RL), der auf den Mittelbereich (CP) zu strahlen ist; und
Sprühen von Gas (AG) auf einen geschmolzenen Teil (MEW) des Werkstücks (W), um den geschmolzenen Teil (MEW) des Werkstücks (W) um den Mittelbereich (CP) herum zu verstreuen; und
Erwärmen eines Basisbereichs (RT) eines Spritzers (SPT) durch den zweiten Laserstrahl (RL2), aus dem Laserstrahl (RL), der auf den Randbereich (PP) zu strahlen ist, wobei der Spritzer (SPT) aus einem verstreuten Teil des Werkstücks (W) besteht und ohne Einwirkung des Öls (OIL) mit einem bearbeiteten Werkstück (MAW) in Kontakt ist, das ein Teil des Werkstücks (W) ist, das bearbeitet wurde, welches das Durchbruchloch (PH) definiert.

2. Laser-Schneidverfahren nach Anspruch 1, ferner umfassend, nach dem Erwärmen des Basisbereichs (RT), das Sprühen des Gases (AG) auf den Spritzer (SPT), um den Spritzer (SPT) von dem bearbeiteten Werkstück (MAW) zu entfernen.

3. Laser-Schneidverfahren nach Anspruch 2, wobei das Entfernen des Spritzers (SPT) von dem bearbeiteten Werkstück (MAW) das Aufsprühen des Gases (AG) um den Basisbereich (RT) herum durch einen Brenner (28) umfasst, während der Brenner (28) entlang eines Kreises (CIR), der den Basisbereich (RT) umgibt, von außerhalb des Basisbereichs (RT) bewegt wird.

4. Laser-Schneidverfahren nach einem der Ansprüche 1 bis 3, wobei der Spritzer (SPT) durch den zweiten Laserstrahl (RL2) bis zu einem Grad zu erwärmen ist, der verhindert, dass der Spritzer (SPT) an dem bearbeiteten Werkstück (MAW) anhaftet und auf dem bearbeiteten Werkstück (MAW) erstarrt.

5. Laser-Schneidverfahren nach einem der Ansprüche 1 bis 4, wobei das Werkstück (W) durch den zweiten Laserstrahl (RL2) bis zu einem Grad zu erwärmen ist, der verhindert, dass ein Außenseitenbereich des Werkstücks (W) durchbrochen wird, wobei der Außenseitenbereich den Randbereich (PP) umgibt.

6. Laser-Schneidverfahren nach Anspruch 5, wobei der Teil des Werkstücks (W) unter dem Beschichtungsbereich (WCP) durch den ersten Laserstrahl (RL1) bis zu einem Grad zu schmelzen ist, der verhindert, dass der Außenseitenbereich, der den Randbereich (PP) umgibt, durchbrochen wird.

7. Laser-Schneidverfahren nach Anspruch 5 oder 6, wobei das Werkstück (W) durch den zweiten Laserstrahl (RL2) bis zu einem Grad zu erwärmen ist, der verhindert, dass ein Spritzer (SPT) an dem Außenseitenbereich, der den Randbereich (PP) umgibt, auftritt.

8. Laserstrahlbearbeitungsmaschine (1), umfassend:
einen Laseroszillator (30A), der gestaltet ist, um einen ersten Laserstrahl (RL1) und einen zweiten Laserstrahl (RL2) durch Emittieren eines Laserstrahls (RL) zu erzeugen;
eine optische Faser (40) mit einem ersten Ende (40a), an dem der erste Laserstrahl (RL1) und der zweite Laserstrahl (RL2) von dem Laseroszillator (30A) aufzunehmen sind, und mit einem zweiten Ende (40b), das dem ersten Ende (40a) gegenüberliegt, wobei die optische Faser (40) umfasst:
einen ersten Übertragungsbereich (42), durch den der erste Laserstrahl (RL1) zu leiten ist;
einen zweiten Übertragungsbereich (44), der um den ersten Übertragungsbereich (42) herum vorgesehen ist und durch den der zweite Laserstrahl (RL2) zu leiten ist; und
einen Reflektor (46), der zwischen dem ersten Übertragungsbereich (42) und dem zweiten Übertragungsbereich (44) vorgesehen ist;
eine Linse (24), die vorgesehen ist, um dem zweiten Ende (40b) der optischen Faser (40) gegenüberzuliegen, und die gestaltet ist, um den ersten Laserstrahl (RL1) und den zweiten Laserstrahl (RL2) auf ein Werkstück (W) zu fokussieren, nachdem der erste Laserstrahl (RL1) und der zweite Laserstrahl (RL2) durch die optische Faser (40) übertragen worden sind;
einen Brenner (28) mit einer Öffnung (28h), durch die die Strahlen (RL1, RL2), die durch die Linse (24) fokussiert sind, und Gas (AG), das zu dem Werkstück (W) zu sprühen ist, geleitet werden;
ein Transfermechanismus (TM), der gestaltet ist, um den Brenner (28) zu bewegen;
eine Düse (15), die gestaltet ist, um Öl (OIL) auf das Werkstück (W) zu sprühen;
eine erste Pumpe (16), die gestaltet ist, um das Öl (OIL) zur Düse (15) zu befördern;
eine zweite Pumpe (17), die gestaltet ist, um das Gas (AG) zum Brenner (28) zu befördern; und
eine Steuerschaltung (7), die gestaltet ist, um den Laseroszillator (30A), die erste Pumpe (16), die zweite Pumpe (17) und den Transfermechanismus (TM) zu steuern,
wobei die Steuerschaltung (7) gestaltet ist, um:
die erste Pumpe (16) zu steuern, so dass das Öl (OIL) auf das Werkstück (W) gesprüht wird, um einen Beschichtungsbereich (WCP) aus dem Öl (OIL) auf dem Werkstück (W) zu erzeugen; und
dann den Laseroszillator (30A) und die zweite Pumpe (17) zu steuern, um den Laserstrahl (RL) auf den Beschichtungsbereich (WCP) zu strahlen und das Gas (AG) auf das durch den ersten Laserstrahl (RL1) geschmolzene Werkstück (W) zu sprühen, um ein Durchbruchloch (PH) durch den Beschichtungsbereich (WCP) zu öffnen,
wobei der Laseroszillator (30A) gestaltet ist, um eine Positionsbeziehung, bei der es sich um eine Verschiebung (DX) handelt, zwischen einer optischen Achse (Ax1) des Laserstrahls (RL), der vom Laseroszillator (30A) ausgegeben wird, und der Mittelachse (Ax2) der optischen Faser (40) zu verändern, so dass im Gebrauch ein Teil des Laserstrahls (RL) in den ersten Übertragungsbereich (42) und ein anderer Teil des Laserstrahls (RL) in den zweiten Übertragungsbereich (44) eintritt; wobei der von dem ersten Übertragungsbereich (42) ausgegebene Laserstrahl (RL) als erster Laserstrahl (RL1) bezeichnet wird und der von dem zweiten Übertragungsbereich (44) ausgegebene Laserstrahl (RL) als zweiter Laserstrahl (RL2) bezeichnet wird;
wobei die Steuerschaltung (7) ferner gestaltet ist, um:
den Laseroszillator (30A) und die Position des Brenners (28) zu steuern, um
eine Ausgabe des Laseroszillators (30A),
die Verschiebung (DX), und
einen Abstand (LW) zwischen einem Brennpunkt (FP) und dem Beschichtungsbereich (WCP) anzupassen,
um eine erste Laserleistungsdichte und eine zweite Laserleistungsdichte zu bestimmen, so dass
eine Laserleistungsdichte des ersten Laserstrahls (RL1) an einem Mittelbereich (CP) des Beschichtungsbereichs (WCP), wobei der Mittelbereich (CP) mit dem Laserstrahl (RL) zu bestrahlen ist, auf die erste Laserleistungsdichte eingestellt ist, eine Laserleistungsdichte des zweiten Laserstrahls (RL2) an einem Randbereich (PP) des Beschichtungsbereichs (WCP), wobei der Randbereich (PP) mit dem zweiten Laserstrahl (RL2) zu bestrahlen ist, auf die zweite Laserleistungsdichte eingestellt wird, die kleiner ist als die erste Laserleistungsdichte, und eine Laserleistungsdichte an einem Grenzbereich (BP) des Beschichtungsbereichs (WCP), der sich zwischen dem Mittelbereich (CP) und dem Randbereich (PP) befindet, auf eine dritte Laserleistungsdichte eingestellt wird, die kleiner als die zweite Laserleistungsdichte ist.

9. Laserstrahlbearbeitungsmaschine (1) nach Anspruch 8, wobei die Steuerschaltung (7) gestaltet ist, um den Transfermechanismus (TM) und die zweite Pumpe (17) zu steuern, so dass das Gas (AG) weiter auf einen Spritzer (SPT) gesprüht wird, der aus dem durch den ersten Laserstrahl (RL1) geschmolzenen Werkstück (W) besteht und durch das Gas (AG) um das Durchbruchloch (PH) herum verteilt wird.

10. Laserstrahlbearbeitungsmaschine (1) nach Anspruch 9, wobei die Steuerschaltung (7) gestaltet ist, um den Transfermechanismus (TM) und die zweite Pumpe (17) zu steuern, so dass das Gas (AG) um das Durchbruchloch (PH) herum versprüht wird, während der Brenner (28) entlang eines Kreises (CIR), der das Durchbruchloch (PH) umgibt, bewegt wird.

## Revendications

1. Procédé de perçage au laser comprenant :
la pulvérisation d'huile (OIL) sur une pièce à usiner (W) pour générer une partie de revêtement (WCP) constituée de l'huile (OIL) sur la pièce à usiner (W) ;
la préparation d'une fibre optique (40) qui comprend une première partie de transmission (42), une deuxième partie de transmission (44) prévue autour de la première partie de transmission (42), et un réflecteur (46) prévu entre la première partie de transmission (42) et la deuxième partie de transmission (44) ;
la génération d'un premier faisceau laser (RL1) et d'un deuxième faisceau laser (RL2) par émission d'un faisceau laser (RL) depuis un oscillateur laser (30A) de telle sorte qu'une partie du faisceau laser (RL) pénètre dans la première partie de transmission (42) et une autre partie du faisceau laser (RL) pénètre dans la deuxième partie de transmission (44), l'oscillateur laser (30A) étant conçu pour modifier une relation de position entre un axe optique (Ax1) du faisceau laser (RL), émis par l'oscillateur laser (30A), et un axe central (Ax2) de la fibre optique (40), le faisceau laser (RL) émis par la première partie de transmission (42) étant désigné comme le premier faisceau laser (RL1), et le faisceau laser (RL) émis par la deuxième partie de transmission (44) étant désigné comme le deuxième faisceau laser (RL2) ;
l'irradiation de la partie de revêtement (WCP) avec le faisceau laser (RL) pour :
régler une densité de puissance de sortie laser du premier faisceau laser (RL1) à une première densité de puissance de sortie laser au niveau d'une partie centrale (CP) de la partie de revêtement (WCP), laquelle partie centrale (CP) doit être irradiée avec le faisceau laser (RL) ;
régler la densité de puissance de sortie laser du deuxième faisceau laser (RL2) à une deuxième densité de puissance de sortie laser au niveau d'une partie périphérique (PP) de la partie de revêtement (WCP), laquelle partie périphérique (PP) entoure la partie centrale (CP), la deuxième densité de puissance de sortie laser étant inférieure à la première densité de puissance de sortie laser ; et
régler la densité de puissance de sortie laser à une troisième densité de puissance de sortie laser au niveau d'une partie de délimitation (BP) de la partie de revêtement (WCP), laquelle partie de délimitation (BP) est située entre la partie centrale (CP) et la partie périphérique (PP), la troisième densité de puissance de sortie laser étant inférieure à la deuxième densité de puissance de sortie laser ;
l'ouverture d'un trou percé (PH) à travers la partie de revêtement (WCP) par :
la fusion d'une partie de la pièce à usiner (W) sous la partie de revêtement (WCP) par le premier faisceau laser (RL1), parmi le faisceau laser (RL), qui doit être irradié vers la partie centrale (CP) ; et
la pulvérisation de gaz (AG) sur une partie fondue (MEW) de la pièce à usiner (W) pour disperser la partie fondue (MEW) de la pièce à usiner (W) autour de la partie centrale (CP) ; et
le chauffage d'une partie de base (RT) d'une projection (SPT) par le deuxième faisceau laser (RL2), parmi le faisceau laser (RL), qui doit être irradié vers la partie périphérique (PP), la projection (SPT) étant constituée d'une partie dispersée de la pièce à usiner (W) et venant en contact, sans intervention de l'huile (OIL), avec une pièce usinée (MAW) qui est une partie de la pièce à usiner (W) qui a été usinée, laquelle définit le trou percé (PH).

2. Procédé de perçage au laser selon la revendication 1, comprenant en outre, après le chauffage de la partie de base (RT), la pulvérisation du gaz (AG) sur la projection (SPT) pour retirer la projection (SPT) de la pièce usinée (MAW).

3. Procédé de perçage au laser selon la revendication 2, dans lequel le retrait de la projection (SPT) de la pièce usinée (MAW) comprend la pulvérisation du gaz (AG) autour de la partie de base (RT) à travers une torche (28) tout en déplaçant la torche (28) le long d'un cercle (CIR) entourant la partie de base (RT) depuis l'extérieur de la partie de base (RT).

4. Procédé de perçage au laser selon l'une quelconque des revendications 1 à 3, dans lequel la projection (SPT) doit être chauffée par le deuxième faisceau laser (RL2) à un degré qui empêche la projection (SPT) d'adhérer à la pièce usinée (MAW) et de se solidifier sur la pièce usinée (MAW).

5. Procédé de perçage au laser selon l'une quelconque des revendications 1 à 4, dans lequel la pièce à usiner (W) doit être chauffée par le deuxième faisceau laser (RL2) à un degré qui empêche qu'une partie de côté extérieur de la pièce à usiner (W) soit percée, la partie de côté extérieur entourant la partie périphérique (PP).

6. Procédé de perçage au laser selon la revendication 5, dans lequel la partie de la pièce à usiner (W) sous la partie de revêtement (WCP) doit être fondue par le premier faisceau laser (RL1) à un degré qui empêche que la partie de côté extérieur entourant la partie périphérique (PP) soit percée.

7. Procédé de perçage au laser selon la revendication 5 ou 6, dans lequel la pièce à usiner (W) doit être chauffée par le deuxième faisceau laser (RL2) à un degré qui empêche qu'une projection (SPT) se produise au niveau de la partie de côté extérieur entourant la partie périphérique (PP).

8. Machine d'usinage de faisceau laser (1) comprenant :
un oscillateur laser (30A) conçu pour générer un premier faisceau laser (RL1) et un deuxième faisceau laser (RL2) en émettant un faisceau laser (RL) ;
une fibre optique (40) ayant une première extrémité (40a) au niveau de laquelle le premier faisceau laser (RL1) et le deuxième faisceau laser (RL2) doivent être reçus depuis l'oscillateur laser (30A) et ayant une deuxième extrémité (40b) opposée à la première extrémité (40a), la fibre optique (40) comprenant :
une première partie de transmission (42) à travers laquelle le premier faisceau laser (RL1) doit passer ;
une deuxième partie de transmission (44) qui est prévue autour de la première partie de transmission (42) et à travers laquelle le deuxième faisceau laser (RL2) doit passer ; et
un réflecteur (46) prévu entre la première partie de transmission (42) et la deuxième partie de transmission (44) ;
une lentille (24) prévue pour faire face à la deuxième extrémité (40b) de la fibre optique (40) et conçue pour focaliser le premier faisceau laser (RL1) et le deuxième faisceau laser (RL2) vers une pièce à usiner (W) après que le premier faisceau laser (RL1) et le deuxième faisceau laser (RL2) ont été transmis à travers la fibre optique (40) ;
une torche (28) ayant une ouverture (28h) à travers laquelle les faisceaux (RL1, RL2) focalisés par la lentille (24) et du gaz (AG) devant être pulvérisé vers la pièce à usiner (W) passent ;
un mécanisme de transfert (TM) conçu pour déplacer la torche (28) ;
une buse (15) conçue pour pulvériser de l'huile (OIL) vers la pièce à usiner (W) ;
une première pompe (16) conçue pour envoyer l'huile (OIL) vers la buse (15) ;
une deuxième pompe (17) conçue pour envoyer le gaz (AG) vers la torche (28) ; et
un circuit de commande (7) conçu pour commander l'oscillateur laser (30A), la première pompe (16), la deuxième pompe (17) et le mécanisme de transfert (TM),
dans lequel le circuit de commande (7) est conçu pour :
commander la première pompe (16) pour pulvériser l'huile (OIL) vers la pièce à usiner (W) afin de générer une partie de revêtement (WCP) constituée de l'huile (OIL) sur la pièce à usiner (W) ; et
puis commander l'oscillateur laser (30A) et la deuxième pompe (17) pour irradier le faisceau laser (RL) vers la partie de revêtement (WCP) et pulvériser le gaz (AG) vers la pièce à usiner (W) fondue par le premier faisceau laser (RL1) afin d'ouvrir un trou percé (PH) à travers la partie de revêtement (WCP),
dans lequel l'oscillateur laser (30A) est conçu pour modifier une relation de position, qui est un décalage (DX), entre un axe optique (Ax1) du faisceau laser (RL), émis par l'oscillateur laser (30A), et l'axe central (Ax2) de la fibre optique (40), de telle sorte qu'en utilisation, une partie du faisceau laser (RL) pénètre dans la première partie de transmission (42) et une autre partie du faisceau laser (RL) pénètre dans la deuxième partie de transmission (44) ; dans lequel le faisceau laser (RL) émis par la première partie de transmission (42) est désigné comme le premier faisceau laser (RL1), et le faisceau laser (RL) émis par la deuxième partie de transmission (44) est désigné comme le deuxième faisceau laser (RL2) ;
dans lequel le circuit de commande (7) est en outre conçu pour :
commander l'oscillateur laser (30A) et une position de la torche (28), afin de régler
une puissance de sortie de l'oscillateur laser (30A),
le décalage (DX), et
une distance (LW) entre un point focal (FP) et la partie de revêtement (WCP),
pour déterminer une première densité de puissance de sortie laser et une deuxième densité de puissance de sortie laser, de telle sorte que
une densité de puissance de sortie laser du premier faisceau laser (RL1) au niveau d'une partie centrale (CP) de la partie de revêtement (WCP), laquelle partie centrale (CP) doit être irradiée avec le faisceau laser (RL), est réglée à la première densité de puissance de sortie laser, une densité de puissance de sortie laser du deuxième faisceau laser (RL2) au niveau d'une partie périphérique (PP) de la partie de revêtement (WCP), laquelle partie périphérique (PP) doit être irradiée avec le deuxième faisceau laser (RL2), est réglée à la deuxième densité de puissance de sortie laser qui est inférieure à la première densité de puissance de sortie laser, et une densité de puissance de sortie laser au niveau d'une partie de délimitation (BP) de la partie de revêtement (WCP), laquelle partie de délimitation (BP) est située entre la partie centrale (CP) et la partie périphérique (PP), est réglée à une troisième densité de puissance de sortie laser qui est inférieure à la deuxième densité de puissance de sortie laser.

9. Machine d'usinage de faisceau laser (1) selon la revendication 8, dans lequel le circuit de commande (7) est conçu pour commander le mécanisme de transfert (TM) et la deuxième pompe (17) pour pulvériser en outre le gaz (AG) sur une projection (SPT) constituée de la pièce à usiner (W) fondue par le premier faisceau laser (RL1) et dispersée autour du trou percé (PH) par le gaz (AG).

10. Machine d'usinage de faisceau laser (1) selon la revendication 9, dans lequel le circuit de commande (7) est conçu pour commander le mécanisme de transfert (TM) et la deuxième pompe (17) pour pulvériser le gaz (AG) autour du trou percé (PH) tout en déplaçant la torche (28) le long d'un cercle (CIR) entourant le trou percé (PH).
